# EUROPEAN PATENT SPECIFICATION

(11) **EP 2 571 197 B1**
(45) Date of publication and mention of the grant of the patent: **18.11.2015**
(21) Application number: 11850863.9
(22) Date of filing: 07.09.2011
(51) Int. Cl.: H04L 12/24, H04M 15/00

(54) **METHOD AND SYSTEM FOR DATA RELOCATION AND BILLING NODE**
VERFAHREN UND SYSTEM FÜR DATENVERSCHIEBUNGS- UND -ABRECHNUNGSKNOTEN
PROCÉDÉ ET SYSTÈME DE TRANSLATION DE DONNÉES ET NOEUD DE FACTURATION

(30) Priority: 24.12.2010 CN 201010604459
(43) Date of publication of application: 20.03.2013
(73) Proprietor: Huawei Technologies Co., Ltd., Longgang District Shenzhen, Guangdong 518129 (CN)
(72) Inventor: PENG, Yunfeng, Shenzhen Guangdong 518129 (CN); LU, Jingshi, Shenzhen Guangdong 518129 (CN); LIU, Shikai, Shenzhen Guangdong 518129 (CN)
(74) Representative: Thun, Clemens
(86) International application number: PCT/CN2011/079420
(87) International publication number: WO 2012/083730

(56) References cited:
- EP-A1- 2 237 545
- WO-A1-2006/035261
- CN-A- 101 132 289
- CN-A- 101 651 761
- CN-A- 102 130 781

## Description

### FIELD OF THE INVENTION

Embodiments of the present invention relate to the field of communications technologies, and in particular to a method, a system, and an apparatus for data relocation.

### BACKGROUND OF THE INVENTION

An operator may develop subscribers using distribution channels such as a virtual operator, a distributor, and an agent. In operation, generally, operations such as charging, transferring, and monthly settlement are centrally performed for these subscribers developed using the distribution channels. If subscriber data is distributed and deployed on different convergent billing points (Convergent Billing Point, CBP), for example, a certain subscriber has two packaged services at the same time, one is a personal packaged service, the other one is a group packaged service, subscriber data of the personal packaged service is stored in CBP1, and subscriber data of the group packaged service is stored in CBP2, in a practical charging process, subscriber data may need to be acquired across two billing nodes for charging. This manner may have a reliability problem because cross-node access is performed.

In the prior art, offline relocation may be performed to centrally relocate subscriber data stored in different CBPs to a same CBP, so that the centralized CBP has all subscriber data of the subscriber. In this way, when charging is performed, subscriber data does not need to be acquired across nodes for charging. However, in the prior art, only offline relocation can be performed.

EP 2237545 A1 discloses a method for user information cutover. The method includes: obtaining information about a user from an IN, submitting the user information to an OCS, or triggering the OCS to obtain the user information from the IN, and requesting the Core Network (CN) to modify the user's CAMEL subscription information into the CAMEL subscription information corresponding To the OCS, and requesting the CN to modify the user's attribution information into the attribution information corresponding to the OCS(c.f. ABSTRACT).

CN 101132289 A1 discloses a combined charge system combining charge method, in which, the applied server receives service request sent by a user and sends a unified charge message to the combined charge system, which decides a charge control mode and finishes related charge operation, and then feeds back the operation result of this time to the applied server to determine a service control mode to finish the service charge by the control mode with the combined charge system.

### SUMMARY OF THE INVENTION

Embodiments of the present invention provide a method and a system for data relocation and a billing node to solve the problem in the prior art that online relocation cannot be performed when a CBP is processing a service request of a subscriber.

An embodiment of the present invention provides a method for data relocation, including:
receiving a relocation request sent by a management node, where the relocation request includes a subscriber key and a relocation type identifier;
determining, according to the subscriber key, that session information corresponding to the subscriber key exists, determining a relocation processing policy according to the relocation type identifier, and recording relocation information; and
sending a relocation response to the management node;
wherein the relocation type identifier is an immediate-to-reserved relocation identifier, the determining a relocation processing policy according to the relocation type identifier, and recording relocation information comprising:
   determining, according to the immediate-to-reserved relocation identifier, to perform immediate-to-reserved relocation processing; and
   searching for, according to the subscriber key, session information corresponding to the subscriber key, determining the start time of the relocation according to the session information, and recording immediate-to-reserved relocation information, wherein the immediate-to-reserved relocation information comprises the subscriber key, the start time of the relocation, and the start time when the subscriber is not allowed to use the service; and
the sending a relocation response to the management node specifically comprising:
   sending a relocation response to the management node, wherein the relocation response comprises the start time of the relocation, so that at the start time of the relocation, the management node sends a data query request to implement data relocation.

An embodiment of the present invention provides a billing node, including:
a relocation request receiving unit, configured to receive a relocation request sent by a management node, where the relocation request includes a subscriber key and a relocation type identifier;
a relocation processing unit, configured to determine, according to the subscriber key, that session information corresponding to the subscriber key exists, determine a relocation processing policy according to the relocation type identifier, and record relocation information; and
a relocation response spending unit, configured to send a relocation response to the management node;
wherein the relocation processing unit comprises an immediate-to-reserved relocation processing subunit, specifically configured to determine, according to an immediate-to-reserved relocation identifier, to perform immediate-to-reserved relocation processing, search for, according to the subscriber key, session information corresponding to the subscriber key, determine the start time of the relocation according to the session information, and record immediate-to-reserved relocation information, wherein the immediate-to-reserved relocation information comprises the subscriber key, the start time of the relocation, and the start time when the subscriber is not allowed to use the service; and
wherein the relocation response sending unit is specifically configured to send a relocation response to the management node, wherein the relocation response comprises the start time of the relocation, so that at the start time of the relocation, the management node is able tosend a data query request to implement data relocation.

An embodiment of the present invention provides a system for data relocation, including a billing node according to the present invention and a management node, configured to send the relocation request to the billing node, and receive the relocation response sent by the management node; wherein when the start time of the relocation comes, the management node is further configured to send a data query request to acquire subscriber data from the billing node, and send the subscriber data to a target billing node to implement data relocation.

In the embodiments of the present invention, a billing node determines, according to a subscriber key, that a billing service of the subscriber key is being processed currently, and determines a relocation processing policy according to a relocation type identifier to perform relocation processing. In this way, the billing node can still process the relocation service while processing the service, thereby improving subscriber experience.

### BRIEF DESCRIPTION OF THE DRAWINGS

FIG. 1 is a flow chart of a method for data relocation according to an embodiment of the present invention;
FIG. 2 is a flow chart of a method for immediate-to-reserved data relocation according to an embodiment of the present invention;
FIG. 3 is a flow chart of a method for forcible relocation according to an embodiment of the present invention;
FIG. 4 is a schematic structural diagram of a billing node according to an embodiment of the present invention;
FIG. 5 is a schematic structural diagram of another billing node according to an embodiment of the present invention; and
FIG. 6 is a schematic structural diagram of a system for data relocation according to an embodiment of the present invention.

### DETAILED DESCRIPTION OF THE EMBODIMENTS

The technical solutions in the embodiments of the present invention are further described below with reference to the accompanying drawings and specific embodiments.

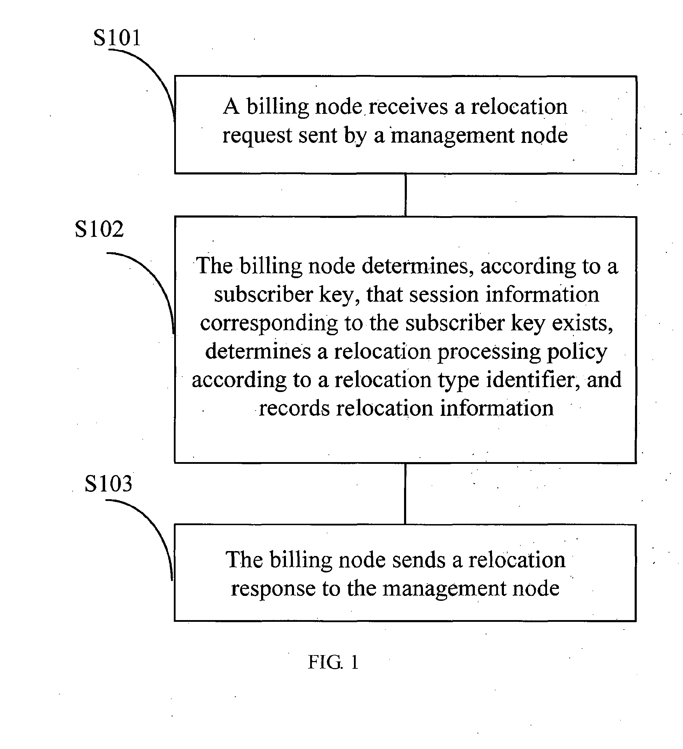

A data relocation solution illustrated in FIG. 1 specifically includes:
S 101: A billing node receives a relocation request sent by a management node, where the relocation request includes a subscriber key and a relocation type identifier.

Generally, before receiving the relocation request sent by the management node, the billing node may further receive a usage application request sent by an agent apparatus, where the usage application request includes a subscriber key, the type of a service that is applied for, and the usage that is applied for.

According to the type of the service and the usage that is applied for, corresponding authorized usage is reserved and a usage application response including the authorized usage is sent to the agent apparatus. At the same time, current session information is stored, where the session information includes the subscriber key, the start time authorized for the current usage, and the end time authorized for the current usage.

When the type of the service that is applied for is the voice type, the difference between the end time authorized for the current usage and the start time authorized for the current usage is equal to the authorized usage.

When the type of the service that is applied for is the data type, the difference between the end time authorized for the current usage and the start time authorized for the current usage is equal to a valid time period of the current authorized usage.

S102: The billing node determines, according to the subscriber key, that session information corresponding to the subscriber key exists, determines a relocation processing policy according to the relocation type identifier, and records relocation information.

If the relocation type identifier is an immediate-to-reserved relocation identifier, it is determined, according to the immediate-to-reserved relocation identifier, to perform immediate-to-reserved relocation processing; the session information corresponding to the subscriber key is searched for according to the subscriber key, the start time of the relocation is determined according to the session information, and immediate-to-reserved relocation information is recorded, where the immediate-to-reserved relocation information includes the subscriber key, the start time of the relocation, and the start time when the subscriber is not allowed to use the service.

If the relocation type identifier is a forcible relocation identifier, it is determined, according to the forcible relocation identifier, to perform forcible relocation processing; subscriber data corresponding to the subscriber key is searched for according to the subscriber key, and forcible relocation information is recorded, where the forcible relocation information includes the subscriber key, the start time of the relocation, and the start time when the subscriber is not allowed to use the service.

S 103: The billing node sends a relocation response to the management node.

When the relocation type identifier is the immediate-to-reserved relocation identifier, the relocation response may include the start time of the relocation. In this way, the management node sends a data query request at the start time of the relocation to implement data relocation.

When the relocation type identifier is the forcible relocation identifier, the relocation response may include the subscriber data. In this way, the management node sends the subscriber data to a target billing node to implement data relocation.

In the embodiment of the present invention, the billing node may be a CBP and may also be an online charging system (online charging system, OCS). The management node may be a customer relationship management (Customer Relationship Management, CRM) and may also be a business management point (business management point, BMP).

In the embodiment of the present invention, a billing node determines, according to a subscriber key, that a billing service of the subscriber key is being processed currently, and determines a relocation processing policy according to a relocation type identifier to perform relocation processing. In this way, the billing node can still process the relocation service while processing the service, thereby improving subscriber experience.

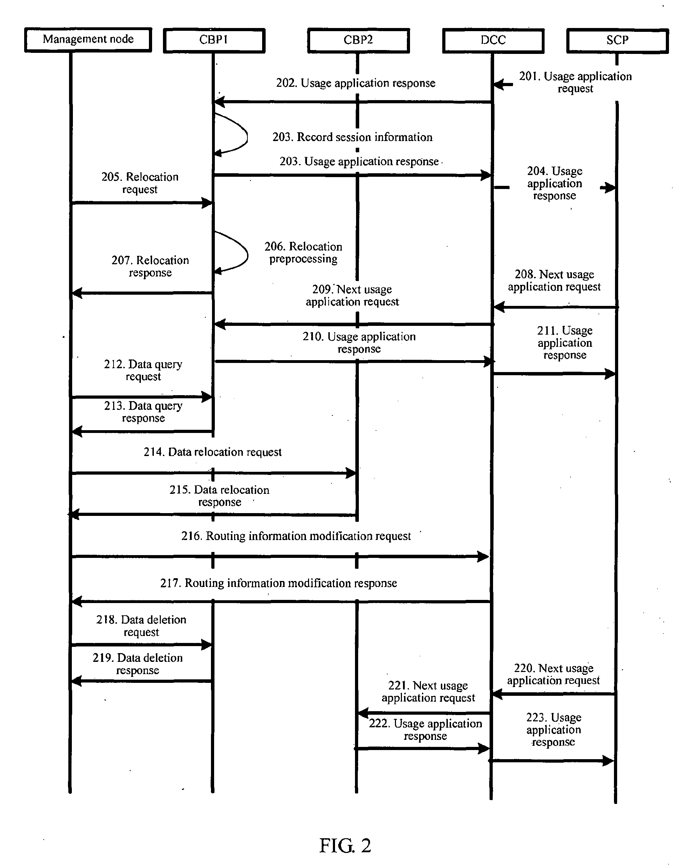

The following further describes the technical solutions in the embodiments of the present invention with reference to FIG. 2.

In a data relocation solution illustrated in FIG. 2, before data relocation, subscriber data is stored in CBP1. At present, a management node needs to relocate the subscriber data into CBP2 because of a service requirement. In addition, CBP1 is processing a usage application request sent by a subscriber. In this case, the data relocation is performed concurrently. The specific process is as follows:
S201: A service control apparatus sends a usage application request to an agent apparatus, where the usage application request includes the type of a service that is applied for, the usage that is applied for, and a subscriber key of the application request, where the subscriber key may uniquely identify the subscriber, the subscriber key may be a terminal number of the subscriber or the ID of the subscriber, and the type of the service may be the voice type and may also be the data type.

For example, the service control apparatus may specifically be a service control point (service control point, SCP), and the service control apparatus is represented by the SCP in the following; and the agent apparatus may specifically be a Diameter credit control (diameter credit control, DCC) agent, and the agent apparatus is represented by the DCC in the following. The agent apparatus may be an independent apparatus and may also be a part of the service control apparatus.

S202: After receiving the usage application request, the DCC acquires the subscriber key of the request, acquires corresponding routing information according to the subscriber key, and sends the usage application request to CBP1 because subscriber data has not been relocated and the subscriber data is still stored in CBP1 in this situation.

S203: After receiving the usage application request, CBP1 reserves corresponding authorized usage according to the type of the service and the usage that is applied for, and returns a usage application response including the authorized usage to the DCC. At the same time, CBP1 stores current session information, where the session information may include the subscriber key, the start time authorized for the current usage, and the end time authorized for the current usage.

If the type of the service is the voice type, the authorized usage is a current available call conversation time that is authorized, that is, the difference between the start time authorized for the current usage and the end time authorized for the current usage is the current available call conversation time, for example, 30 minutes. If the type of the service is the data type, the authorized usage is available traffic that is authorized and a current valid time period, that is, the difference between the start time authorized for the current usage and the end time authorized for the current usage is the current valid time period.

S204: The DCC receives the usage application response of CBP1, and sends the usage application response to the SCP.

S205: In this situation, the management node sends a relocation request to CBP1 to apply for data relocation of the subscriber, where the relocation request carries the subscriber key and a relocation type identifier.

The management node stores multiple relocation policies, for example, in this embodiment, the relocation policy is the immediate-to-reserved relocation policy solution. Therefore, the relocation request is specifically an immediate-to-reserved relocation request and carries an immediate-to-reserved identifier.

S206: CBP1 receives the relocation request and performs relocation preprocessing, that is, learns that the current relocation is immediate-to-reserved relocation according to the immediate-to-reserved identifier. CBP1 further searches for, according to the subscriber key, session record information corresponding to the subscriber key, determines the start time of the relocation according to the session record information, and adds a record for immediate-to-reserved relocation information, where the immediate-to-reserved relocation information includes the subscriber key, the start time of the relocation, the expiration time of the relocation, and the start time when the subscriber is not allowed to use the service.

The management node and each CBP all stores relocation policies. When the management node sends a relocation request carrying a relocation type identifier to a CBP, the CBP determines a relocation policy according to the relocation type identifier, and then performs corresponding relocation processing. There may be various relocation policies, for example, the forcible relocation policy, the data relocation refusing policy, the immediate-to-reserved relocation policy in this embodiment, and the like.

When the type of the service is the voice type, CBP1 determines, according to the session record information and the current time of receiving the relocation request, that the current time of receiving the relocation request is still within the current call conversation time that can be authorized, then reserves a next available call conversation time that is authorized, where the next available call conversation time that is authorized is shorter than a general available call conversation time that is authorized and reserved, and determines the time of the reserved relocation according to the session record information and the next available call conversation time that is authorized and reserved. For example, if the start time authorized for the current usage is 9:00, the end time authorized for the current usage is 9:30, the current time of receiving the relocation request is 9:20, and the next available call conversation time that is authorized and reserved is 10 minutes, the start time of the relocation is 9:40 (10 minutes after 9:30), and the immediate-to-reserved relocation information may include the start time 9:40 of the relocation, the expiration time 10:00 (assumed) of the relocation, and the start time 9:38 (assumed) when the subscriber is not allowed to use the service. Herein, the start time when the subscriber is not allowed to use the service is generally before the start time of the relocation, and certainly may also be the same as the start time of the relocation. However, the start time when the subscriber is not allowed to use the service will not be after the start time of the relocation.

When the type of the service is the data type, CBP1 determines, according to the session record information and the current time of receiving the relocation request, that the current time of receiving the relocation request is still within the current valid time period that is authorized, then reserves a next valid time period that is authorized, where the next valid time period that is authorized needs to be shorter than a general valid time period that is authorized and reserved, and determines the time of the reserved relocation according to the session record information and the next valid time period that is authorized and reserved. For example, if the start time authorized for the current usage is 9:00, the end time authorized for the current usage is 9:30, the current time of receiving the relocation request is 9:20, and the next valid time period that is authorized and reserved is 10 minutes, the start time of the relocation is 9:40 (40 minutes after 9:30), and the immediate-to-reserved relocation information may include the start time 9:40 of the relocation, the expiration time 10:00 (assumed) of the relocation, and the start time 9:40 (assumed) when the subscriber is not allowed to use the service.

In addition, in another embodiment of the present invention, if CBP1 does not process a service corresponding to the subscriber key in this situation, when CBP1 receives the relocation request sent by the management node, CBP1 immediately performs relocation and sends a relocation response including the subscriber data to the management node.

S207: CBP1 sends a relocation response to the management node, where the relocation response includes the start time of the relocation and the immediate-to-reserved relocation information.

In this situation, after receiving the relocation response, the management node waits for coming of the start time of the relocation.

S208: When the current available call conversation time that is authorized or the current valid time period that is authorized expires, the SCP reports the actual current service usage and a usage application request to the DCC.

For example, the time comes to 9:30, and then the SCP reports the actual current service usage and a usage application request for applying for next service usage.

The actual current service usage may be reported to the DCC in an independent request and may also be carried in the usage application request and reported. Herein, the actual current service usage carried in the usage application request is taken as an example. The usage application request further includes the type of the current service, the usage that is applied for, and the subscriber key.

S209: After receiving the usage application request, the DCC acquires the subscriber key of the usage application request, acquires corresponding routing information according to the subscriber key, and sends the usage application request to CBP1 because the subscriber data has not been relocated and the subscriber data is still stored in CBP1 in this situation.

S210: After receiving the usage application request, CBP1 performs, according to the reported usage, rating on the usage to obtain a rating result, determines that the available call conversation time that is authorized in the current application is 10 minutes or the current valid time period is 10 minutes according to the reserved relocation record, that is, the authorized and reserved usage is 10 minutes, and returns a usage application response including the authorized and reserved usage and the rating result to the DCC.

S211: The DCC receives the usage application response of CBP1, and sends the usage application response to the SCP.

S212: In this situation, the current time comes to 9:40, and the management node may perform a data relocation operation. The management node sends a data query request to CBP1, where the data query request includes the subscriber key.

S213: After receiving the data query request, CBP1 acquires, according to the subscriber key, the subscriber data corresponding to the subscriber, and returns a data query response including the subscriber data to the management node, where the subscriber data includes the subscriber key, subscriber information, account information, subscribed package information of the subscriber, customized intimate number information of the subscriber, personal number information of the subscriber, accumulate item information of the subscriber, account balance information of the subscriber, arrears information of the subscriber, and the like.

S214: After receiving the data query response, the management node sends a data relocation request including the subscriber data to target CBP2 of the relocation, that is, performs data relocation.

S215: CBP2 receives the subscriber data, stores the subscriber data, and sends a data relocation response to the management node, where the data relocation response includes a relocation success identifier.

S216: After receiving the data relocation response, the management node sends a routing information modification request to the DCC according to the relocation success identifier, where the routing information modification request includes the subscriber key and the current storage location of the subscriber data, that is, CBP2.

S217: The DCC modifies the routing information according to the subscriber key to change the storage location of the subscriber data from CBP1 to CBP2. After the routing information is modified successfully, CBP2 sends a routing information modification response to the management node, where the routing information modification response includes a modification success identifier.

S218: After receiving the routing information modification response, the management node sends a data deletion request to CBP1 to request CBP1 to delete the subscriber data corresponding to the subscriber key.

S219: After receiving the data deletion request, CBP1 deletes the subscriber data corresponding to the subscriber key, and sends a data deletion response to the management node, where the data deletion response includes a deletion success identifier.

During the data relocation, if CBP1 receives a usage application request sent by the SCP, it will refuse to process the usage application request.

S220: After the relocation is successful, the SCP sends a usage application request to the DCC again, where the usage application request includes the type of a service that is applied, the usage that is applied for, and a subscriber key of the application request, the subscriber key may uniquely identify the subscriber, the subscriber key may be a terminal number of the subscriber or the ID of the subscriber, and the type of the service may be the voice type and may also be the data type.

S221: After receiving the usage application request, the DCC acquires the subscriber key of the request, acquires corresponding routing information according to the subscriber key, and sends the usage application request to CBP2 because the subscriber data has been relocated and the subscriber data is stored in CBP2 in this situation.

S222: After receiving the usage application request, CBP2 reserves corresponding authorized usage according to the type of the service and the usage that is applied for, and returns a usage application response including the authorized usage to the DCC. At the same time, CBP2 stores current session information, where the session information may include the subscriber key, the start time authorized for the current usage, and the end time authorized for the current usage.

S223: The DCC receives the usage application response of CBP2, and sends the usage application response to the SCP.

In the embodiment of the present invention, the CBP receives the relocation request sent by the management node while processing the usage application request of the subscriber. The relocation request carries the immediate-to-reserved relocation identifier. Therefore, the reserved relocation is performed according to the immediate-to-reserved relocation identifier. The start time of the relocation is determined according to the current session record information. In this way, CBP1 can still process the service before the time of the reserved relocation comes, but after the time of the reserved relocation comes, CBP1 rejects a new usage application request. In this way, online relocation can be implemented when CBP1 concurrently processes a service request of the subscriber, thereby improving subscriber experience.

In another embodiment of the present invention, if a failure occurs during the relocation performed in steps 214-215, that is, the data relocation response includes a relocation failure identifier, subsequent steps 216-219 will not be performed. In addition, when the current time does not come to the expiration time of the relocation stored by the management node, a data relocation request is send to CBP2 again for a relocation operation until the current time exceeds the expiration time of the relocation stored by the management node. If the current time exceeds the expiration time of the relocation stored by the management node, the management node stops sending the data relocation request. If in this situation, CBP1 receives a usage application request that includes the subscriber key and is sent by the DCC, CBP1 may know, according to the stored reserved relocation information, that the management node fails to perform the reserved relocation because the current time exceeds the expiration time of the relocation. In this situation, CBP1 may normally process the usage application request, and the management node records relocation failure information; or CBP1 sends a forcible relocation reminding request to the management node and interrupts processing of the current usage application request. After receiving the forcible relocation reminding request, the management node performs forcible relocation policy processing.

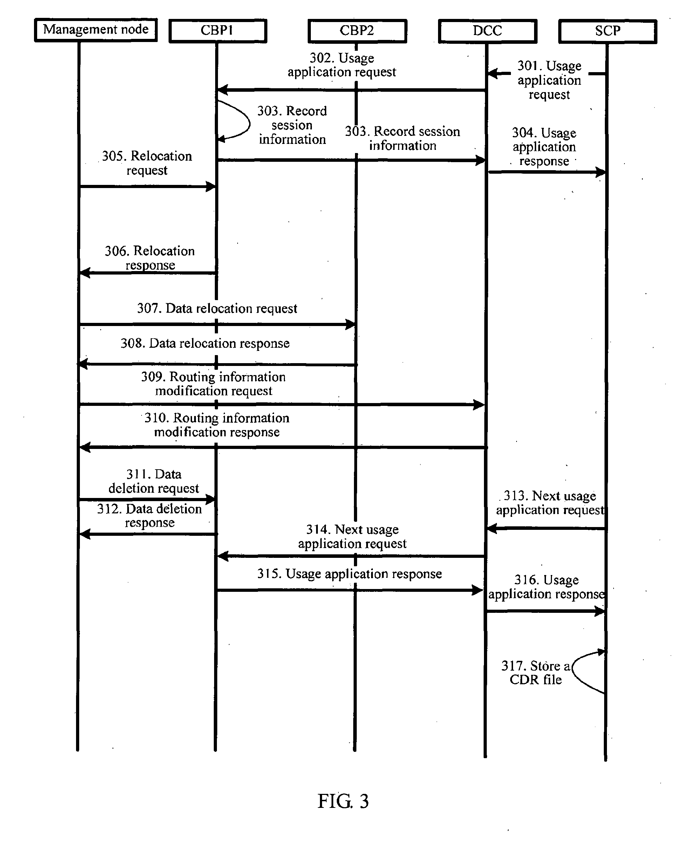

In a data relocation solution illustrated in FIG. 3, a forcible relocation policy is adopted. The specific procedure is as follows:
S301-S304 are the same as S201-S204.
S305: In this situation, the management node sends a forcible relocation request to CBP1 to apply for forcible relocation of subscriber data, where the forcible relocation request carries the subscriber key and a forcible relocation identifier.
S306: CBP1 receives the forcible relocation request, performs forcible relocation according to the forcible relocation identifier, sends a relocation response including the subscriber data to the management node, and adds a record for the forcible relocation information.

CBP1 interrupts processing of a current service corresponding to the subscriber key, sends a relocation response including the subscriber data to the management node, and adds a record for the forcible relocation information, where the forcible relocation information includes the subscriber key, the start time of the relocation, the expiration time of the relocation, and the start time when the subscriber is not allowed to use the service.

S307: After receiving the relocation response, the management node sends a data relocation request including the subscriber data to target CBP2 of the relocation, that is, performs data relocation.

S308-S312 are the same as S215-S219.

S313: When the current available call conversation time that is authorized or the current valid time period that is authorized expires, the SCP reports the actual current service usage and a usage application request to the DCC.

The actual current service usage may be reported to the DCC in an independent request and may also be carried in the usage application request and reported. Herein, the actual current service usage carried in the usage application request is taken as an example. The usage application request further includes the type of the current service, the usage that is applied for, and the subscriber key.

S314: After receiving the usage application request, the DCC acquires the subscriber key of the usage application request, acquires corresponding routing information according to the subscriber key, and sends the usage application request to CBP1 if the subscriber data has not been successfully relocated in this situation, that is, the subscriber data is still stored in CBP1. If the relocation is successful in this situation, that is, the subscriber data is still stored in CBP2, the usage application request is sent to CBP2. The subsequent process is the same as S220-S223.

S315: CBP1 receives the usage application request, determines, according to the reserved relocation record, to refuse to process the usage application request corresponding to the subscriber key, that is, a new available call conversation time that is authorized or a new valid time period that is authorized cannot be reserved, refuses to perform rating and charging on the reported usage, and returns a usage application response including a processing refusing identifier and the usage to the DCC.

S316: The DCC receives the usage application response of CBP1, and sends the usage application response to the SCP.

S317: The SCP receives the usage application response, determines that CBP1 does not perform rating and charging on the usage, and therefore writes the usage into a CDR file and sends the CDR file to a DCC proxy, so that after the relocation is successful, the DCC proxy subsequently sends a charging request including the CDR file to CBP2 for offline charging.

In the embodiment of the present invention, the CBP receives the relocation request sent by the management node while processing the usage application request of the subscriber. The relocation request carries the forcible relocation identifier. Therefore, the forcible relocation is performed according to the forcible relocation identifier. In this case, CBP1 rejects a new usage application request and interrupts the service currently processed. When the DCC proxy reports the actual usage of the subscriber, CBP1 refuses to perform processing, and sends a response including the actual usage to the DCC proxy for offline charging. In this way, online relocation can be implemented when CBP1 concurrently processes a service request of the subscriber, thereby improving subscriber experience.

In another embodiment of the present invention, if the relocation policy stored by the management node is relocation refusing, the relocation request in S205 is a relocation refusing request, where the relocation refusing request includes a relocation refusing identifier and a subscriber key. In this situation, the processing performed by CBP1 in S206 is as follows: CBP1 receives the relocation refusing request, determines, according to the subscriber key, that CBP1 is processing a service corresponding to the subscriber key, and sends a relocation refusing response to the management node according to the relocation refusing identifier to notify the management node that the relocation fails. CBP1 normally processes a usage application request that includes the subscriber key and is sent by the SCP. If the relocation refusing request is received and it is determined, according to the subscriber key, that CBP1 is not processing a service corresponding to the subscriber key, a relocation operation is immediately performed, and a relocation response including the subscriber data is sent to the management node. The management node performs the subsequent relocation operation. The relocation process is the same as S214-S219.

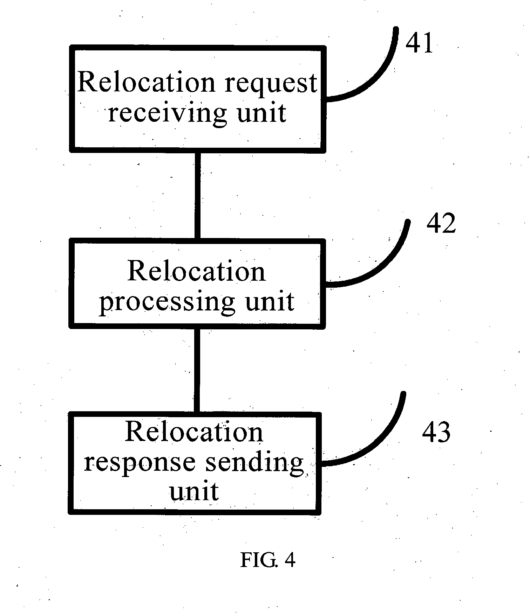

As shown in FIG. 4, an embodiment of the present invention further provides a billing node, including:
a relocation request receiving unit 41, configured to receive a relocation request sent by a management node, where the relocation request includes a subscriber key and a relocation type identifier;
a relocation processing unit 42, configured to determine, according to the subscriber key, that session information corresponding to the subscriber key exists, determine a relocation processing policy according to the relocation type identifier, and record relocation information; and
a relocation response sending unit 43, configured to send a relocation response to the management node.

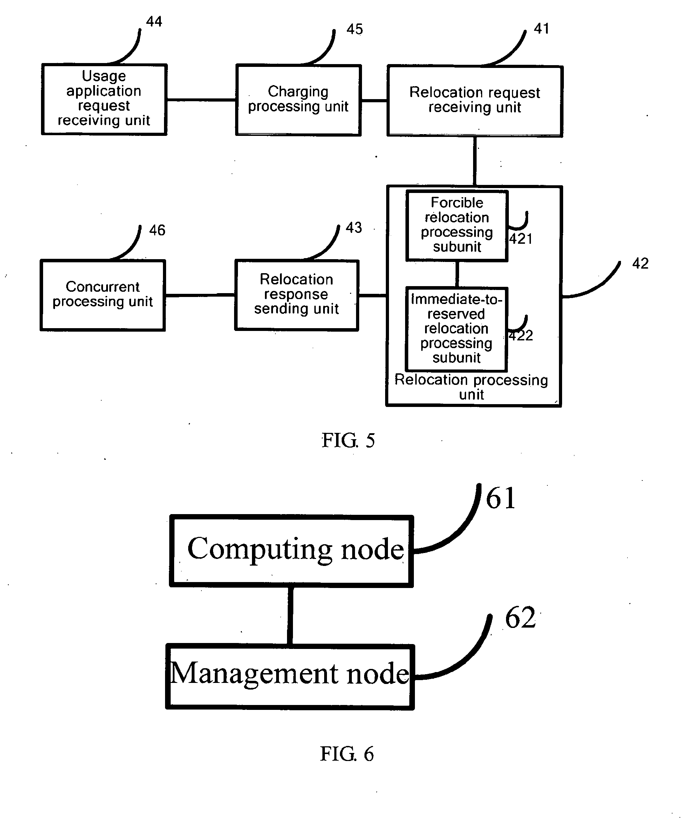

Further, as shown in FIG. 5, the relocation processing unit 42 includes an immediate-to-reserved relocation processing subunit 421, specifically configured to determine, according to an immediate-to-reserved relocation identifier, to perform immediate-to-reserved relocation processing, search for, according to the subscriber key, session information corresponding to the subscriber key, determine the start time of the relocation according to the session information, and record immediate-to-reserved relocation information, where the immediate-to-reserved relocation information includes the subscriber key, the start time of the relocation, and the start time when the subscriber is not allowed to use the service; the relocation response sending unit 43 is specifically configured to send a relocation response to the management node, where the relocation response includes the start time of the relocation, so that at the start time of the relocation, the management node sends a data query request to implement data relocation.

Further, as shown in FIG. 5, the relocation processing unit 42 includes a forcible relocation processing subunit 422, specifically configured to determine, according to a forcible relocation identifier, to perform forcible relocation processing, search for, according to the subscriber key, subscriber data corresponding to the subscriber key, and record forcible relocation information, where the forcible relocation information includes the subscriber key, the start time of the relocation, and the start time when the subscriber is not allowed to use the service; the relocation response sending unit 43 is specifically configured to send a relocation response to the management node, where the relocation response includes the subscriber data, so that the management node sends the subscriber data to a target billing node to implement data relocation.

Further, as shown in FIG. 5, the billing node further includes a usage application request receiving unit 44, configured to receive a usage application request sent by an agent apparatus, where the usage application request includes a subscriber key, the type of a service that is applied for, and the usage that is applied for; and a charging processing unit 45, configured to reserve corresponding authorized usage according to the type of the service and the usage that is applied for, send a usage application response including the authorized usage to the agent apparatus, and at the same time store current session information, where the session information includes the subscriber key, the start time authorized for the current usage, and the end time authorized for the current usage.

Further, as shown in FIG. 5, the billing node further includes a concurrent processing unit 46, configured to receive a usage application request sent by the agent apparatus, when the time of receiving the usage application request is before the start time when the subscriber is not allowed to use the service, reserve a time that can be authorized, and send a usage application response including the time that can be authorized and is reserved to the agent apparatus; when the time of receiving the usage application request is after the start time when the subscriber is not allowed to use the service, refuse to process the usage application request, and send a usage application response including a refusing identifier to the agent apparatus; when receiving the actual usage reported by the agent apparatus and the time of receiving the reported actual usage is after the start time when the subscriber is not allowed to use the service, refuse to perform rating processing on the actual usage and send the actual usage to the agent apparatus.

In the embodiment of the present invention, a billing node determines, according to a subscriber key, that a billing service of the subscriber key is being processed currently, and determines a relocation processing policy according to a relocation type identifier to perform relocation processing. In this way, the billing node can still process the relocation service while processing the service, thereby improving subscriber experience.

For the more than one relocation policy and relocation request involved in this embodiment and the involved specific working processes, reference may be made to related content disclosed in the embodiments illustrated in FIG. 1 to FIG. 3. Details are not provided herein.

As shown in FIG. 6, an embodiment of the present invention further provides a system for data relocation, including:
a billing node 61, configured to receive a relocation request sent by a management node, where the relocation request includes a subscriber key and a relocation type identifier; determine, according to the subscriber key, that session information corresponding to the subscriber key exists, determine a relocation processing policy according to the relocation type identifier, and record relocation information; and send a relocation response to the management node; and
the management node 62, configured to send the relocation request to the billing node, and receive the relocation response sent by the management node.

In the embodiment of the present invention, a billing node determines, according to a subscriber key, that a billing service of the subscriber key is being processed currently, and determines a relocation processing policy according to a relocation type identifier to perform relocation processing. In this way, the billing node can still process the relocation service while processing the service, thereby improving subscriber experience.

For the more than one relocation policy and relocation request involved in this embodiment and the involved specific working processes, reference may be made to related content disclosed in the embodiments illustrated in FIG. 1 to FIG. 3. Details are not provided herein.

Persons of ordinary skill in the art should understand that all or part of the steps of the methods in the embodiments may be implemented by a program instructing relevant hardware. The program may be stored in a computer readable storage medium. When the program runs, the above steps of the method in the embodiment are performed. The storage medium may be any medium capable of storing program codes, such as a ROM, a RAM, a magnetic disk, or an optical disk, and like. The preceding charging apparatus and balance management center may both be a host device, for example, a PC or a mobile terminal. The host device includes a memory that stores a code for executing the present invention, one or multiple microprocessors for executing the code, and a communication interface for providing network access.

## Claims

1. A method for data relocation, comprising:
receiving (S101) a relocation request sent by a management node, wherein the relocation request comprises a subscriber key and a relocation type identifier;
determining (S102), according to the subscriber key, that session information corresponding to the subscriber key exists, determining a relocation processing policy according to the relocation type identifier, and recording relocation information; and
sending (S103) a relocation response to the management node;
wherein the relocation type identifier is an immediate-to-reserved relocation identifier, the determining (S102) a relocation processing policy according to the relocation type identifier and recording relocation information comprising:
determining, according to the immediate-to-reserved relocation identifier, to perform immediate-to-reserved relocation processing; and
searching for, according to the subscriber key, session information corresponding to the subscriber key, determining the start time of the relocation according to the session information, and recording immediate-to-reserved relocation information, wherein the immediate-to-reserved relocation information comprises the subscriber key, the start time of the relocation, and the start time when the subscriber is not allowed to use the service; and the sending (S103) a relocation response to the management node comprising:
sending a relocation response to the management node, wherein the relocation response comprises the start time of the relocation, so that at the start time of the relocation, the management node sends a data query request to implement data relocation.

2. The method according to claim 1, wherein before the receiving (S101) a relocation request sent by a management node, the method further comprises:
receiving a usage application request sent by an agent apparatus, wherein the usage application request comprises a subscriber key, the type of a service that is applied for, and the usage that is applied for; and
reserving corresponding authorized usage according to the type of the service and the usage that is applied for, sending a usage application response comprising the authorized usage to the agent apparatus, and at the same time storing current session information, wherein the session information comprises the subscriber key, the start time authorized for the current usage, and the end time authorized for the current usage.

3. The method according to claim 2, wherein when the type of the service that is applied for is the voice type, the difference between the end time authorized for the current usage and the start time authorized for the current usage is equal to the authorized usage; and
when the type of the service that is applied for is the data type, the difference between the end time authorized for the current usage and the start time authorized for the current usage is equal to a valid time period of the current authorized usage.

4. The method according to claim 1, further comprising:
receiving the usage application request sent by the agent apparatus, and when the time of receiving the usage application request is before the start time when the subscriber is not allowed to use the service, reserving a time that can be authorized, and sending a usage application response comprising the time that can be authorized and is reserved to the agent apparatus;
when the time of receiving the usage application request is after the start time when the subscriber is not allowed to use the service, refusing to process the usage application request, and sending a usage application response comprising a refusing identifier to the agent apparatus; and
when receiving the actual usage reported by the agent apparatus and the time of receiving the reported actual usage is after the start time when the subscriber is not allowed to use the service, refusing to perform rating processing on the actual usage and sending the actual usage to the agent apparatus.

5. A billing node, comprising:
a relocation request receiving unit (41), configured to receive a relocation request sent by a management node, wherein the relocation request comprises a subscriber key and a relocation type identifier;
a relocation processing unit (42), configured to determine, according to the subscriber key, that session information corresponding to the subscriber key exists, determine a relocation processing policy according to the relocation type identifier, and record relocation information; and
a relocation response sending unit (43), configured to send a relocation response to the management node;
wherein the relocation processing unit (42) comprises an immediate-to-reserved relocation processing subunit (422), configured to
• determine, according to an immediate-to-reserved relocation identifier, to perform immediate-to-reserved relocation processing,
• search for, according to the subscriber key, session information corresponding to the subscriber key,
• determine the start time of the relocation according to the session information, and
• record immediate-to-reserved relocation information,
wherein the immediate-to-reserved relocation information comprises the subscriber key, the start time of the relocation, and the start time when the subscriber is not allowed to use the service; and
wherein the relocation response sending unit (43) is configured to send a relocation response to the management node, wherein the relocation response comprises the start time of the relocation, so that at the start time of the relocation, the management node is able to send a data query request to implement data relocation.

6. The billing node according to claim 5, further comprising:
a usage application request receiving unit (44), configured to receive a usage application request sent by an agent apparatus, wherein the usage application request comprises a subscriber key, the type of a service that is applied for, and the usage that is applied for; and
a charging processing unit (45), configured to reserve corresponding authorized usage according to the type of the service and the usage that is applied for, send a usage application response comprising the authorized usage to the agent apparatus, and at the same time store current session information, wherein the session information comprises the subscriber key, the start time authorized for the current usage, and the end time authorized for the current usage.

7. The billing node according to claim 6, wherein the relocation processing unit (42) further comprises a forcible relocation processing subunit (421), configured to determine, according to a forcible relocation identifier, to perform forcible relocation processing; and
search for, according to the subscriber key, subscriber data corresponding to the subscriber key, and record forcible relocation information, wherein the forcible relocation information comprises the subscriber key, the start time of the relocation, and the start time when the subscriber is not allowed to use the service; and
wherein the relocation response sending unit (43) is further configured to send a relocation response to the management node, wherein the relocation response comprises the subscriber data, so that the management node (62) is able to send the subscriber data to a target billing node to implement data relocation.

8. The billing node according to claim 5 or 7, further comprising: a concurrent processing unit (46), configured to receive a usage application request sent by the agent apparatus, when the time of receiving the usage application request is before the start time when the subscriber is not allowed to use the service, reserve a time that can be authorized, and send a usage application response comprising the time that can be authorized and is reserved to the agent apparatus; when the time of receiving the usage application request is after the start time when the subscriber is not allowed to use the service, refuse to process the usage application request, and send a usage application response comprising a refusing identifier to the agent apparatus; when receiving the actual usage reported by the agent apparatus and the time of receiving the reported actual usage is after the start time when the subscriber is not allowed to use the service, refuse to perform rating processing on the actual usage and send the actual usage to the agent apparatus.

9. A system for data relocation, comprising:
a billing node according to one of claims 5 to 8 and
a management node (62), configured to send the relocation request to the billing node, and receive the relocation response sent by the billing node;
wherein when the start time of the relocation comes, the management node is further configured to send a data query request to acquire subscriber data from the billing node, and send the subscriber data to a target billing node to implement data relocation.

## Patentansprüche

1. Verfahren zum Verschieben von Daten, das Folgendes umfasst:
Empfangen (S101) einer Verschiebungsanforderung, die durch einen Managementknoten gesendet wird, wobei die Verschiebungsanforderung einen Teilnehmerschlüssel und einen Verschiebungstypbezeichner umfasst;
Bestimmen (S102) gemäß dem Teilnehmerschlüssel, dass Sitzungsinformationen, die dem Teilnehmerschlüssel entsprechen, vorhanden sind, Bestimmen einer Verschiebungsverarbeitungsstrategie gemäß dem Verschiebungstypbezeichner und
Aufzeichnen von Verschiebungsinformationen; und
Senden (S103) einer Verschiebungsantwort zu dem Managementknoten;
wobei der Verschiebungstypbezeichner ein "immediate-to-reserved"-Verschiebungsbezeichner ist und das Bestimmen (S102) einer Verschiebungsverarbeitungsstrategie gemäß dem Verschiebungstypbezeichner und
das Aufzeichnen von Verschiebungsinformationen Folgendes umfasst:
Bestimmen gemäß dem "immediate-to-reserved"-Verschiebungsbezeichner, eine "immediate-to-reserved"-Verschiebungsbearbeitung auszuführen; und
Suchen, gemäß dem Teilnehmerschlüssel, nach Sitzungsinformationen, die dem Teilnehmerschlüssel entsprechen, Bestimmen der Startzeit der Verschiebung gemäß den Sitzungsinformationen und Aufzeichnen von "immediate-to-reserved"-Verschiebungsinformationen, wobei die "immediate-to-reserved"-Verschiebungsinformationen den Teilnehmerschlüssel, die Startzeit der Verschiebung und die Startzeit, wenn der Teilnehmer den Dienst nicht verwenden darf, umfassen; und
das Senden (S103) einer Verschiebungsantwort zu dem Managementknoten Folgendes umfasst:
Senden einer Verschiebungsantwort zu dem Managementknoten, wobei die Verschiebungsantwort die Startzeit der Verschiebung umfasst, so dass der Managementknoten zu der Startzeit der Verschiebung eine Datenabfrageanforderung sendet, um die Datenverschiebung zu implementieren.

2. Verfahren nach Anspruch 1, wobei das Verfahren vor dem Empfangen (S101) der Verschiebungsanforderung, die durch den Managementknoten gesendet wird, ferner Folgendes umfasst:
Empfangen einer Nutzungsantragsanforderung, die durch eine Agentenvorrichtung gesendet wird, wobei die Nutzungsantragsanforderung einen Teilnehmerschlüssel, den Typ eines Dienstes, der beantragt wird, und die Nutzung, die beantragt wird, umfasst; und
Reservieren entsprechender autorisierter Nutzung gemäß dem Typ des Dienstes und der Nutzung, die beantragt werden, und Senden einer Nutzungsantragsantwort, die die autorisierte Nutzung umfasst, zu der Agentenvorrichtung, und gleichzeitig Speichern aktueller Sitzungsinformationen, wobei die Sitzungsinformationen den Teilnehmerschlüssel, die Startzeit, die für die aktuelle Nutzung autorisiert ist, und die Endzeit, die für die aktuelle Nutzung autorisiert ist, umfassen.

3. Verfahren nach Anspruch 2, wobei dann, wenn der Typ des Dienstes, der beantragt wird, der Sprachtyp ist, die Differenz zwischen der Endzeit, die für die aktuelle Nutzung autorisiert ist, und der Startzeit, die für die aktuelle Nutzung autorisiert ist, gleich der autorisierten Nutzung ist; und
wenn der Typ des Dienstes, der beantragt wird, der Datentyp ist, die Differenz zwischen der Endzeit, die für die aktuelle Nutzung autorisiert ist, und der Startzeit, die für die aktuelle Nutzung autorisiert ist, gleich einer gültigen Zeitspanne der aktuellen autorisierten Nutzung ist.

4. Verfahren nach Anspruch 1, das ferner Folgendes umfasst:
Empfangen der Nutzungsantragsanforderung, die durch die Agentenvorrichtung gesendet wird, und wenn die Zeit des Empfangens der Nutzungsantragsanforderung vor der Startzeit ist, wenn der Teilnehmer den Dienst nicht nutzen darf, Reservieren einer Zeit, die autorisiert werden kann, und Senden einer Nutzungsantragsantwort, die die Zeit umfasst, die autorisiert werden kann und reserviert ist, zu der Agentenvorrichtung;
wenn die Zeit des Empfangens der Nutzungsantragsanforderung nach der Startzeit ist, wenn der Teilnehmer den Dienst nicht nutzen darf, Zurückweisen, die Nutzungsantragsantwort zu bearbeiten, und Senden einer Nutzungsantragsantwort, die einen Zurückweisungsbezeichner umfasst, zu der Agentenvorrichtung; und
wenn die tatsächliche Nutzung, die durch die Agentenvorrichtung berichtet wird, empfangen wird und die Zeit des Empfangens der berichteten tatsächlichen Nutzung nach der Startzeit ist, wenn der Teilnehmer den Dienst nicht nutzen darf, Zurückweisen, die Tarifierungsverarbeitung auf der tatsächlichen Nutzung auszuführen, und Senden der tatsächlichen Nutzung zu der Agentenvorrichtung.

5. Gebührenabrechnungsknoten, der Folgendes umfasst:
eine Verschiebungsanforderungsempfangseinheit (41), die konfiguriert ist, eine Verschiebungsanforderung, die durch einen Managementknoten gesendet wird, zu empfangen, wobei die Verschiebungsanforderung einen Teilnehmerschlüssel und einen Verschiebungstypbezeichner umfasst;
eine Verschiebungsverarbeitungseinheit (42), die konfiguriert ist, gemäß dem Teilnehmerschlüssel zu bestimmen, dass Sitzungsinformationen, die dem Teilnehmerschlüssel entsprechen, vorhanden sind, eine Verschiebungsverarbeitungsstrategie gemäß dem Verschiebungstypbezeichner zu bestimmen und Verschiebungsinformationen aufzuzeichnen; und
eine Verschiebungsantwortsendeeinheit (43), die konfiguriert ist, eine Verschiebungsantwort zu dem Managementknoten zu senden;
wobei die Verschiebungsverarbeitungseinheit (42) eine "immediate-to-reserved"-Verschiebungsverarbeitungsuntereinheit (422) umfasst, die konfiguriert ist:
• gemäß einem "immediate-to-reserved"-Verschiebungsbezeichner zu bestimmen, "immediate-to-reserved"-Verschiebungsbearbeitung auszuführen,
• gemäß dem Teilnehmerschlüssel nach Sitzungsinformationen, die dem Teilnehmerschlüssel entsprechen, zu suchen,
• die Startzeit der Verschiebung gemäß den Sitzungsinformationen zu bestimmen, und
• "immediate-to-reserved"-Verschiebungsinformationen aufzuzeichnen,
wobei die "immediate-to-reserved"-Verschiebungsinformationen den Teilnehmerschlüssel, die Startzeit der Verschiebung und die Startzeit, wenn der Teilnehmer den Dienst nicht nutzen darf, umfassen; und
wobei die Verschiebungsantwortsendeeinheit (43) konfiguriert ist, eine Verschiebungsantwort zu dem Managementknoten zu senden, wobei die Verschiebungsantwort die Startzeit der Verschiebung umfasst, so dass zu der Startzeit der Verschiebung der Managementknoten imstande ist, eine Datenabfrageanforderung zu senden, um Datenverschiebung zu implementieren.

6. Gebührenabrechnungsknoten nach Anspruch 5, der ferner Folgendes umfasst:
eine Nutzungsantragsanforderungsempfangseinheit (44), die konfiguriert ist, eine Nutzungsantragsanforderung zu empfangen, die durch eine Agentenvorrichtung gesendet wird, wobei die Nutzungsantragsanforderung einen Teilnehmerschlüssel, den Typ eines Dienstes, der beantragt wird, und die Nutzung, die beantragt wird, umfasst; und
eine Gebührenberechnungsverarbeitungseinheit (45), die konfiguriert ist, entsprechende autorisierte Nutzung gemäß dem Typ des Dienstes und der Nutzung, die beantragt sind, zu reservieren, eine Nutzungsantragsantwort, die die autorisierte Nutzung umfasst, zu der Agentenvorrichtung zu senden, und gleichzeitig aktuelle Sitzungsinformationen zu speichern, wobei die Sitzungsinformationen den Teilnehmerschlüssel, die Startzeit, die für die aktuelle Nutzung autorisiert ist, und die Endzeit, die für die aktuelle Nutzung autorisiert ist, umfassen.

7. Gebührenabrechnungsknoten nach Anspruch 6, wobei die Verschiebungsverarbeitungseinheit (42) ferner eine Zwangsverschiebungsverarbeitungsuntereinheit (421) umfasst, die konfiguriert ist, gemäß einem Zwangsverschiebungsbezeichner zu bestimmen, Zwangsverschiebungsverarbeitung auszuführen; und
gemäß dem Teilnehmerschlüssel nach Teilnehmerdaten zu suchen, die dem Teilnehmerschlüssel entsprechen, und Zwangsverschiebungsinformationen aufzuzeichnen, wobei die Zwangsverschiebungsinformationen den Teilnehmerschlüssel, die Startzeit der Verschiebung und die Startzeit, wenn der Teilnehmer den Dienst nicht nutzen darf, umfassen; und
wobei die Verschiebungsantwortsendeeinheit (43) ferner konfiguriert ist, eine Verschiebungsantwort zu dem Managementknoten zu senden, wobei die Verschiebungsantwort die Teilnehmerdaten umfasst, so dass der Managementknoten (62) imstande ist, die Teilnehmerdaten zu dem Ziel-Gebührenabrechnungsknoten zu senden, um Datenverschiebung zu implementieren.

8. Gebührenabrechnungsknoten nach Anspruch 5 oder 7, der ferner Folgendes umfasst:
eine Einheit (46) zum gleichzeitigen Verarbeiten, die konfiguriert ist, eine Nutzungsantragsanforderung, die durch die Agentenvorrichtung gesendet wird, zu empfangen, wenn die Zeit des Empfangens der Nutzungsantragsanforderung vor der Startzeit ist, wenn der Teilnehmer den Dienst nicht nutzen darf, eine Zeit, die autorisiert werden kann, zu reservieren und eine Nutzungsantragsantwort, die die Zeit umfasst, die autorisiert werden kann und reserviert ist, zu der Agentenvorrichtung zu senden; wenn die Zeit des Empfangens der Nutzungsantragsanforderung nach der Startzeit ist, wenn der Teilnehmer den Dienst nicht nutzen darf, zurückzuweisen, die Nutzungsantragsantwort zu bearbeiten, und eine Nutzungsantragsantwort, die einen Zurückweisungsbezeichner umfasst, zu der Agentenvorrichtung zu senden; wenn die tatsächliche Nutzung, die durch die Agentenvorrichtung berichtet wird, empfangen wird und die Zeit des Empfangens der berichteten tatsächlichen Nutzung nach der Startzeit ist, wenn der Teilnehmer den Dienst nicht nutzen darf, zurückzuweisen, die Tarifierungsverarbeitung auf der tatsächlichen Nutzung auszuführen, und die tatsächliche Nutzung zu der Agentenvorrichtung zu senden.

9. System zur Datenverschiebung, das Folgendes umfasst:
einen Gebührenabrechnungsknoten nach einem der Ansprüche 5 bis 8, und
einen Managementknoten (62), der konfiguriert ist, die Verschiebungsanforderung zu dem Gebührenabrechnungsknoten zu senden und die Verschiebungsantwort, die durch den Gebührenabrechnungsknoten gesendet wird, zu empfangen;
wobei, wenn die Startzeit der Verschiebung eintritt, der Managementknoten ferner konfiguriert ist, eine Datenabfrageanforderung zu senden, um Teilnehmerdaten von dem Gebührenabrechnungsknoten zu erfassen, und die Teilnehmerdaten zu einem Ziel-Gebührenabrechnungsknoten zu senden, um Datenverschiebung zu implementieren.

## Revendications

1. Procédé de réadressage de données, comprenant les étapes suivantes :
recevoir (S101) une requête de réadressage envoyée par un noeud de gestion, la demande de réadressage comprenant une clé d'abonné et un identifiant de type de réadressage ;
déterminer (S102), en fonction de la clé d'abonné, que des informations de session correspondant à la clé d'abonné existent, déterminer une politique de traitement de réadressage selon l'identifiant de type de réadressage, et enregistrer des informations de réadressage ; et
envoyer (S103) une réponse de réadressage au noeud de gestion ;
l'identifiant de type de réadressage étant un identifiant de réadressage immédiat à réservé, la détermination (S102) d'une politique de traitement de réadressage selon l'identifiant de type de réadressage et les informations de réadressage d'enregistrement comprenant les étapes suivantes :
déterminer, selon l'identifiant de réadressage immédiat à réservé, d'effectuer un traitement de réadressage immédiat à réservé ; et
rechercher, selon la clé d'abonné, des informations de session correspondant à la clé d'abonné, déterminer l'heure de début du réadressage selon les informations de session, et enregistrer des informations de réadressage immédiat à réservé, les informations de réadressage immédiat à réservé comprenant la clé d'abonné, l'heure de début du réadressage, et l'heure de début lorsque l'abonné n'est pas autorisé à utiliser le service ; et
l'envoi (S103) d'une réponse de réadressage au noeud de gestion comprend l'étape suivante :
envoyer une réponse de réadressage au noeud de gestion, la réponse de réadressage comprenant l'heure de début du réadressage, de manière à ce que, à l'heure de début du réadressage, le noeud de gestion envoie une requête de demande de données pour implémenter un réadressage de données.

2. Procédé selon la revendication 1, dans lequel avant la réception (S101) d'une requête de réadressage envoyée par un noeud de gestion, le procédé comprend en outre les étapes suivantes :
recevoir une requête de demande d'utilisation envoyée par un appareil agent, la requête de demande d'utilisation comprenant une clé d'abonné, le type d'un service qui est demandé, et l'utilisation qui est demandée ; et
réserver l'utilisation autorisée correspondante conformément au type de service et à l'utilisation qui est demandée, envoyer une réponse de demande d'utilisation comprenant l'utilisation autorisée à l'appareil agent et, dans le même temps, stocker des informations de session courante, les informations de session comprenant la clé d'abonné, l'heure de début autorisée pour l'utilisation courante, et l'heure de fin autorisée pour l'utilisation courante.

3. Procédé selon la revendication 2, dans lequel lorsque le type de service qui est demandé est le type vocal, la différence entre l'heure de fin autorisée pour l'utilisation courante et l'heure de début autorisée pour l'utilisation courante est égale à l'utilisation autorisée ; et
lorsque le type de service qui est demandé est le type données, la différence entre l'heure de fin autorisée pour l'utilisation courante et l'heure de début autorisée pour l'utilisation courante est égale à une période de temps valide de l'utilisation autorisée courante.

4. Procédé selon la revendication 1, comprenant en outre les étapes suivantes :
recevoir la requête de demande d'utilisation envoyée par l'appareil agent, et lorsque le moment de réception de la requête de demande d'utilisation est antérieur à l'heure de début lorsque l'abonné n'est pas autorisé à utiliser le service, réserver un moment qui peut être autorisé, et envoyer une réponse de demande d'utilisation comprenant le moment qui peut être autorisé et est réservé à l'appareil agent ;
lorsque le moment de réception de la requête de demande d'utilisation est postérieur à l'heure de début lorsque l'abonné n'est pas autorisé à utiliser le service, refuser de traiter la requête de demande d'utilisation, et envoyer une réponse de demande d'utilisation comprenant un identifiant de refus à l'appareil agent ; et
lors de la réception de l'utilisation réelle déclarée par l'appareil agent et lorsque le moment de réception de l'utilisation réelle déclarée est postérieur à l'heure de début lorsque l'abonné n'est pas autorisé à utiliser le service, refuser d'effectuer un traitement d'évaluation sur l'utilisation réelle et envoyer l'utilisation réelle à l'appareil agent.

5. Noeud de facturation comprenant :
une unité de réception de requête de réadressage (41), configurée pour recevoir une requête de réadressage envoyée par un noeud de gestion, la requête de réadressage comprenant une clé d'abonné et un identifiant de type de réadressage ;
une unité de traitement de réadressage (42), configurée pour déterminer, en fonction de la clé d'abonné, que des informations de session correspondant à la clé d'abonné existent, déterminer une politique de traitement de réadressage selon l'identifiant de type de réadressage, et enregistrer des informations de réadressage ; et
une unité d'envoi de réponse de réadressage (43), configurée pour envoyer une réponse de réadressage au noeud de gestion ;
l'unité de traitement de réadressage (42) comprenant une sous-unité de traitement de réadressage immédiat à réservé (422), configurée pour :
déterminer, selon un identifiant de réadressage immédiat à réservé, d'effectuer un traitement de réadressage immédiat à réservé,
rechercher, selon la clé d'abonné, des informations de session correspondant à la clé d'abonné,
déterminer l'heure de début du réadressage selon les informations de session, et enregistrer des informations de réadressage immédiat à réservé,
les informations de réadressage immédiat à réservé comprenant la clé d'abonné, l'heure de début du réadressage, et l'heure de début lorsque l'abonné n'est pas autorisé à utiliser le service ; et
l'unité d'envoi de réponse de réadressage (43) étant configurée pour envoyer une réponse de réadressage au noeud de gestion, la réponse de réadressage comprenant l'heure de début du réadressage, de manière à ce que, à l'heure de début du réadressage, le noeud de gestion est capable d'envoyer une requête de demande de données pour implémenter un réadressage de données.

6. Noeud de facturation selon la revendication 5, comprenant en outre :
une unité de réception de requête de demande d'utilisation (44), configurée pour recevoir une requête de demande d'utilisation envoyée par un appareil agent, la requête de demande d'utilisation comprenant une clé d'abonné, le type d'un service qui est demandé, et l'utilisation qui est demandée ; et
une unité de traitement de facturation (45), configurée pour réserver l'utilisation autorisée correspondante conformément au type de service et à l'utilisation qui est demandée, envoyer une réponse de demande d'utilisation comprenant l'utilisation autorisée à l'appareil agent et, dans le même temps, stocker des informations de session courante, les informations de session comprenant la clé d'abonné, l'heure de début autorisée pour l'utilisation courante, et l'heure de fin autorisée pour l'utilisation courante.

7. Noeud de facturation selon la revendication 6, dans lequel l'unité de traitement de réadressage (42) comprend en outre une sous-unité de traitement de réadressage forcé (421), configurée pour déterminer, conformément à un identifiant de réadressage forcé, d'effectuer un traitement de réadressage forcé ; et
rechercher, conformément à la clé d'abonné, des données d'abonné correspondant à la clé d'abonné, et enregistrer des informations de réadressage forcé, les informations de réadressage forcé comprenant la clé d'abonné, l'heure de début du réadressage, et l'heure de début lorsque l'abonné n'est pas autorisé à utiliser le service ; et
l'unité d'envoi de réponse de réadressage (43) étant en outre configurée pour envoyer une réponse de réadressage au noeud de gestion, la réponse de réadressage comprenant les données d'abonné, de manière à ce que le noeud de gestion (62) soit capable d'envoyer les données d'abonné à un noeud de facturation cible pour implémenter un réadressage de données.

8. Noeud de facturation selon la revendication 5 ou la revendication 7, comprenant en outre : une unité de traitement concurrente (46), configurée pour recevoir une requête de demande d'utilisation envoyée par l'appareil agent, lorsque le moment de réception de la requête de demande d'utilisation est antérieur à l'heure de début lorsque l'abonné n'est pas autorisé à utiliser le service, réserver un moment qui peut être autorisé et envoyer une réponse de demande d'utilisation comprenant le moment qui peut être autorisé et est réservé à l'appareil agent ; lorsque le moment de réception de la requête de demande d'utilisation est postérieur à l'heure de début lorsque l'abonné n'est pas autorisé à utiliser le service, refuser de traiter la requête de demande d'utilisation, et envoyer une réponse de demande d'utilisation comprenant un identifiant de refus à l'appareil agent ; lors de la réception de l'utilisation réelle déclarée par l'appareil agent et lorsque le moment de réception de l'utilisation réelle déclarée est postérieur à l'heure de début lorsque l'abonné n'est pas autorisé à utiliser le service, refuser d'effectuer un traitement d'évaluation sur l'utilisation réelle et envoyer l'utilisation réelle à l'appareil agent.

9. Système de réadressage de données, comprenant :
un noeud de facturation selon l'une des revendications 5 à 8, et
un noeud de gestion (62), configuré pour envoyer la requête de réadressage au noeud de facturation, et recevoir la réponse de réadressage envoyée par le noeud de facturation ;
dans lequel, lorsque l'heure de début du réadressage arrive, le noeud de gestion est en outre configuré pour envoyer une requête de demande de données pour acquérir des données d'abonné depuis le noeud de facturation, et envoyer les données d'abonné à un noeud de facturation cible pour implémenter un réadressage de données.
